# EUROPÄISCHE PATENTANMELDUNG

(11) **EP 4 847 979 A1**
(43) Veröffentlichungstag der Anmeldung: **02.12.2026**
(21) Anmeldenummer: 25179272.7
(22) Anmeldetag: 28.05.2025
(51) Int. Cl.: G02B 6/38

(54) **OPTISCHER STECKVERBINDER, GEGENSTECKELEMENT UND OPTISCHE STECKVERBINDUNG**

(71) Anmelder: Rosenberger-OSI GmbH & Co. OHG, 86167 Augsburg (DE)
(72) Erfinder: Komarow, Max, 86167 Augsburg (DE); Pries, Holger, 86167 Augsburg (DE)
(74) Vertreter: Lorenz & Kollegen

(57) **Zusammenfassung**

Die Erfindung betrifft einen optischen Steckverbinder (2) zur Verbindung mit einem Gegensteckelement (3), aufweisend einen Steckverbinderkörper (4) und eine relativ zu dem Steckverbinderkörper (4) axial verschiebbare Entriegelungshülse (5), wobei durch axiales Verschieben der Entriegelungshülse (5) ein Rastmittel (6) des Steckverbinderkörpers (4) aus einer Rastverbindung (9) mit dem Gegensteckelement (3) entriegelbar ist. Erfindungsgemäß ist ein Risko des Eindringens von Flüssigkeiten oder Verschmutzungen zwischen den Steckverbinderkörper (4) und die Entriegelungshülse (5) durch wenigstens
- ein unmittelbar zwischen dem Steckverbinderkörper (4) und der Entriegelungshülse (5) angeordnetes erstes Dichtungselement (21) des optischen Steckverbinders (2); und/oder
- ein unmittelbar zwischen dem Gegensteckelement (3) und der Entriegelungshülse (5) angeordnetes zweites Dichtungselement (25) des optischen Steckverbinders (2); und/oder
- einen an einem in Steckrichtung (S) vorderen Endabschnitt der Entriegelungshülse (5) angeordneten Abdichtungsbereich (24) zur unmittelbaren Kontaktierung mit einem dritten Dichtungselement (23) des Gegensteckelements (3)
verhindert oder zumindest reduziert.

## Beschreibung

Die Erfindung betrifft einen optischen Steckverbinder zur Verbindung mit einem Gegensteckelement, aufweisend einen Steckverbinderkörper und eine relativ zu dem Steckverbinderkörper axial verschiebbare Entriegelungshülse, gemäß dem Oberbegriff des Anspruchs 1.

Die Erfindung betrifft außerdem ein Gegensteckelement, vorzugsweise einen optischen Gegensteckverbinder oder eine Abdeckkappe, zur Verbindung mit einem eine axial verschiebbare Entriegelungshülse aufweisenden optischen Steckverbinder, gemäß dem Oberbegriff des Anspruchs 11.

Die Erfindung betrifft ferner eine optische Steckverbindung, aufweisend einen optischen Steckverbinder und ein Gegensteckelement.

Aus der optischen Verbindungstechnik sind diverse optische Steckverbinder bekannt. Optische Steckverbinder dienen bekanntermaßen dem Verbinden von lichtleitenden Übertragungsstrecken, insbesondere zur Übertragung von optischen Datensignalen, zwischen einem Steckverbinder und einem korrespondierenden Gegensteckverbinder. Bei einem Steckverbinder bzw. Gegensteckverbinder kann es sich um einen Kabelstecker, einen Einbaustecker, eine Buchse, eine Kupplung oder einen Adapter handeln. Die im Rahmen der Erfindung verwendete Bezeichnung "Steckverbinder" bzw. "Gegensteckverbinder" steht stellvertretend für alle Varianten.

Zum schnellen und komfortablen Stecken und Lösen von Steckverbindungen sind optische Steckverbinder mit automatischer Verrastung und einem bedarfsweise betätigbaren Entriegelungsmechanismus auf Basis einer axial beweglichen Hülse bekannt. Steckverbinder mit einer dementsprechenden Verrastung werden häufig als "Push-Pull-Steckverbinder" bezeichnet.

Optische Steckverbindungen müssen in vielen Anwendungen - insbesondere auch im Außenbereich - hohen mechanischen und klimatischen Beanspruchungen standhalten und dabei häufig auch zuverlässig gegen das Eindringen von Feuchtigkeit, Staub und sonstigen Schmutzpartikeln abgedichtet sein.

Aus der US 10,830,964 B2 ist ein optischer Push-Pull-Steckverbinder bekannt, bei dem im Bereich der optischen Schnittstelle ein Dichtungselement zur Abdichtung der gesteckten Steckverbindung gegenüber Umwelteinflüssen vorgesehen ist. Hierfür ist das Dichtungselement, das nachfolgend auch als "Schnittstellendichtung" bezeichnet wird, an einer geeigneten axialen Position unmittelbar zwischen dem Steckverbinder und dem Gegensteckverbinder angeordnet.

Es hat sich allerdings gezeigt, dass die bekannten Dichtungskonzepte von optischen Push-Pull-Steckverbindern für besonders sicherheitskritische oder raue Umgebungsbedingungen - wie etwa im Bahnverkehr oder an Mobilfunkmasten - mitunter nicht den erhöhten Anforderungen an eine zuverlässige Abdichtung genügen, da es bei Push-Pull-Systemen konstruktiv bedingt nicht möglich ist, die Entriegelungshülse vollständig spielfrei an dem Steckverbindergehäuse zu fixieren. Somit kann es unter mechanischer Fremdeinwirkung - etwa durch Windlasten an Funkmasten oder Druckstößen bzw. Vibrationen im Bahnverkehr - zu einer Relativbewegung der Entriegelungshülse gegenüber dem Steckverbindergehäuse kommen. Es ist zwar in der Regel ausreichend sichergestellt, dass die Verriegelung hierbei nicht unbeabsichtigt gelöst wird, ein "Klappern" der Entriegelungshülse kann jedoch zumeist nicht verhindert werden, wodurch Staub oder Feuchtigkeit in den Bereich der Rastverbindung vordringen kann. Gelangt Feuchtigkeit in den Verriegelungsbereich und gefriert dort, kann dies zu einem Blockieren der Rastmechanik führen, wodurch die optische Steckverbindung nicht mehr ohne Weiteres gelöst werden kann. Darüber hinaus kann das Eindringen von Schmutzpartikeln oder das Gefrieren von Feuchtigkeit im Bereich des Dichtungselements dessen Dichtwirkung beeinträchtigen und dessen Lebensdauer reduzieren. Auch können beim späteren Lösen der optischen Steckverbindung in der Rastmechanik eingeschlossene Partikel unkontrolliert durch die Dichtung gelangen. Die Erfinder haben erkannt, dass insbesondere bei einem Trennen der Steckverbindung durch einen "Sogeffekt" Schmutzpartikel durch die Rastmechanik hindurch bis in den optischen Verbindungsbereich gezogen werden können und dort anschließend an optischen Flächen anhaften.

Es besteht daher Bedarf an einem verbesserten Dichtungs- und Rastkonzept für optische Steckverbinder, das auch unter extremen mechanischen und klimatischen Bedingungen eine zuverlässige Funktion gewährleistet.

In Anbetracht des bekannten Stands der Technik besteht die Aufgabe der vorliegenden Erfindung darin, einen optischen Steckverbinder mit einem komfortablen und zuverlässigen Rastmechanismus bereitzustellen, mit gleichzeitig optimiertem Dichtungskonzept.

Der vorliegenden Erfindung liegt außerdem die Aufgabe zugrunde, ein Gegensteckelement bereitzustellen, das sich vorteilhaft zur Verwendung mit einem optischen Steckverbinder mit einem komfortablen und zuverlässigen Rastmechanismus eignet, mit gleichzeitig optimiertem Dichtungskonzept.

Der vorliegenden Erfindung liegt auch die Aufgabe zugrunde, eine optische Steckverbindung mit einem komfortablen und zuverlässigen Rastmechanismus bereitzustellen, mit gleichzeitig optimiertem Dichtungskonzept.

Die Aufgabe wird für den optischen Steckverbinder mit den in Anspruch 1 aufgeführten Merkmalen gelöst. Hinsichtlich des Gegensteckelements wird die Aufgabe durch die Merkmale des Anspruchs 11 und betreffend die optische Steckverbindung durch Anspruch 12 gelöst.

Die abhängigen Ansprüche und die nachfolgend beschriebenen Merkmale betreffen vorteilhafte Ausführungsformen und Varianten der Erfindung.

Die Erfindung betrifft einen optischen Steckverbinder, vorzugsweise einen optischen Kabelsteckverbinder, zur Verbindung mit einem Gegensteckelement. Der optische Steckverbinder weist einen Steckverbinderkörper und eine relativ zu dem Steckverbinderkörper axial verschiebbare Entriegelungshülse auf, wobei durch axiales Verschieben der Entriegelungshülse ein Rastmittel des Steckverbinderkörpers aus einer Rastverbindung mit dem Gegensteckelement entriegelbar ist.

Vorzugsweise ist die Rastverbindung durch ein "Zurückziehen" der Entriegelungshülse entgegen der Steckrichtung bzw. in die von dem Gegensteckelement wegweisende Richtung entriegelbar. In Sonderfällen kann die Entriegelung aber auch durch axiales Verschieben der Entriegelungshülse in die Steckrichtung erfolgen. Auch eine zusätzliche rotative Bewegung der Entriegelungshülse bzw. eine Drehbewegung der Entriegelungshülse kann zur Entriegelung der Rastverbindung dienen.

Bei dem optischen Steckverbinder handelt es sich vorzugsweise um einen optischen Steckverbinder mit einer sogenannten "Push-Pull-Verriegelung". Das Grundprinzip von Push-Pull-Steckverbindern ist grundsätzlich bekannt, weshalb hierauf nicht in allen Details eingegangen wird.

Beispielhaft sei zum Grundprinzip auf die US 10,830,964 B2 verwiesen, deren Inhalt durch Verweis in die vorliegende Beschreibung mitaufgenommen sei. Es sei außerdem betont, dass der optische Steckverbinder im Rahmen der vorliegenden Erfindung auch von dem bekannten "Push-Pull"-Konzept abweichen kann.

Bei dem (optischen) Gegensteckelement kann es sich im Rahmen der Erfindung grundsätzlich um ein beliebiges Bauteil oder um eine beliebige Baugruppe handeln, die mit dem optischen Steckverbinder auf die hierin beschriebene Weise zusammensteckbar ist. Insbesondere eignet sich die Erfindung zur Verwendung des optischen Steckverbinders mit einem optischen Gegensteckverbinder. Bei dem Gegensteckelement kann es sich aber beispielsweise auch um eine Abdeckkappe für den optischen Steckverbinder handeln, mittels der die Steckschnittstelle des optischen Steckverbinder im nicht mit einem optischen Gegensteckverbinder verbundenen Zustand abgedeckt bzw. geschlossen sein kann, um die Steckschnittstelle gegen mechanische Beschädigung oder gegen das Eindringen von Verschmutzung und Flüssigkeiten zu schützen (z. B. in einem Auslieferungszustand oder in einem Wartungsfall). Die Abdeckkappe kann gegebenenfalls auch als "Dummy"-Gegensteckverbinder bezeichnet werden. Gegebenenfalls kann die Abschlusskappe auch als Teil des optischen Steckverbinders angesehen werden (beispielsweise kann die Abdeckkappe mit dem Steckverbinderkörper mittelbar oder unmittelbar (z. B. über einen Draht oder eine lösbare Rastverbindung) verbunden sein.

Vorzugsweise ist der optische Steckverbinder ausgebildet, um während des Zusammensteckens mit dem korrespondierenden Gegensteckelement automatisch mit dem Gegensteckelement zu verrasten. Vorzugsweise ist besagte Rastverbindung anschließend ausschließlich durch ein gewolltes axiales Verschieben der Entriegelungshülse (insbesondere durch ein Zurückziehen entgegen der Steckrichtung) wieder entriegelbar.

Unter einem "Steckverbinderkörper" (und einem nachfolgend noch genannten "Gegensteckelementkörper") kann im Rahmen der Erfindung insbesondere wenigstens ein tragendes Basiselement des Steckverbinders bzw. Gegensteckelements verstanden werden, an dem das Rastmittel angeordnet ist oder aus dem das Rastmittel herausgeführt und gegenüber dem die Entriegelungshülse relativ gesehen axial beweglich ist. Bei dem Steckverbinderkörper bzw. Gegensteckelementkörper kann es sich grundsätzlich um ein beliebiges einteiliges Bauteil oder um eine mehrteilige Baugruppe des Steckverbinders bzw. Gegensteckelements handeln. Beispielsweise kann es sich bei dem Steckverbinderkörper bzw. Gegensteckelementkörper um ein Gehäuseteil des optischen Steckverbinders bzw. Gegensteckelements handeln, insbesondere um ein außenliegendes Gehäuseteil. Bevorzugt ist der Steckverbinderkörper mehrteilig ausgebildet und weist weiter bevorzugt ein in Steckrichtung vorderes Bauteil auf (z. B. einen so genannten "Steckerkäfig") und ein mit dem vorderen Bauteil verbundenes, hinteres Bauteil (z. B. das eigentliche Steckverbindergehäuse bzw. einen so genannten "Steckerkopf"). Vorzugsweise ist das Rastmittel im mehrteiligen Fall des Steckverbinderkörpers an dem vorderen Bauteil angeordnet.

Der Steckverbinderkörper und/oder der Gegensteckelementkörper kann aus einem Metall, aus einem Kunststoff und/oder aus einem sonstigen Material oder einer Materialkombination ausgebildet sein.

Vorzugsweise, aber nicht notwendigerweise, ist der Steckverbinderkörper oder zumindest ein Bauteil des Steckverbinderkörpers einstückig mit dem wenigstens einen Rastmittel ausgebildet oder weist zumindest eine Öffnung bzw. Durchführung zur Ausbildung des Rastmittels auf, so dass das Rastmittel zur Verrastung mit dem Gegensteckelement zugänglich ist und/oder mit der Entriegelungshülse mechanisch zusammenzuwirken vermag. Vorzugsweise ist das Rastmittel nach innen gerichtet, insbesondere wenn die Entriegelungshülse den Steckverbinderkörper umhüllt. Alternativ kann das Rastmittel allerdings auch nach außen gerichtet sein, insbesondere wenn die Entriegelungshülse innerhalb des Steckverbinderkörpers verläuft.

Es sei betont, dass der Steckverbinderkörper vorzugsweise nicht lediglich als Träger des Rastmittels zu verstehen sein muss, sondern auch mechanische, optische oder sonstige Funktionen des Steckverbinders übernehmen kann. Der Steckverbinderkörper kann beispielsweise zur Aufnahme und/oder Fixierung eines Lichtwellenleiters oder einer Ferrule dienen.

Erfindungsgemäß ist vorgesehen, dass ein Eindringen von Flüssigkeiten oder Verschmutzungen zwischen den Steckverbinderkörper und die Entriegelungshülse verhindert wird oder das Risiko hierfür zumindest reduziert ist. Hierfür sind im Rahmen des Erfindungsgedankens drei Varianten vorgesehen, die einzeln oder in beliebiger Kombination realisiert sein können.

Gemäß einer ersten erfindungsgemäßen Variante weist der optische Steckverbinder wenigstens ein zwischen dem Steckverbinderkörper und der Entriegelungshülse angeordnetes, erstes Dichtungselement auf. Vorzugsweise ist das wenigstens eine erste Dichtungselement dabei unmittelbar zwischen dem Steckverbinderkörper und der Entriegelungshülse angeordnet. Es sei betont, dass auch mehrere erste Dichtungselemente vorgesehen sein können, beispielsweise zwei oder drei erste Dichtungselemente, die in Axialrichtung bzw. Steckrichtung verteilt sind.

Gemäß einer zweiten erfindungsgemäßen Variante weist der optische Steckverbinder wenigstens ein zwischen dem Gegensteckelement und der Entriegelungshülse angeordnetes, zweites Dichtungselement auf. Vorzugsweise ist das wenigstens eine zweite Dichtungselement dabei unmittelbar zwischen dem Steckverbinderkörper und der Entriegelungshülse angeordnet. Es sei betont, dass auch mehrere zweite Dichtungselemente vorgesehen sein können, beispielsweise zwei oder drei zweite Dichtungselemente, die in Axialrichtung bzw. Steckrichtung verteilt sind.

Gemäß einer dritten erfindungsgemäßen Variante weist der optische Steckverbinder wenigstens einen Abdichtungsbereich zur Kontaktierung mit einem dritten Dichtungselement des Gegensteckelements auf. Der wenigstens eine Abdichtungsbereich ist dabei vorzugsweise an einem in Steckrichtung vorderen Endabschnitt der Entriegelungshülse angeordnet. Der Abdichtungsbereich kann auf einer Mantelfläche (innenmantelseitig oder außenmantelseitig) der Entriegelungshülse und/oder auf einer Stirnfläche der Entriegelungshülse ausgebildet sein.

Vorzugsweise ist der wenigstens eine Abdichtungsbereich zur unmittelbaren mechanischen Kontaktierung mit besagtem dritten Dichtungselement ausgebildet und positioniert. Es sei betont, dass auch mehrere Abdichtungsbereiche und/oder dritte Dichtungselemente vorgesehen sein können, beispielsweise zwei oder drei Abdichtungsbereiche, die in Axialrichtung bzw. Steckrichtung verteilt sind, um jeweilige dritte Dichtungselemente zu kontaktieren.

Auf vorteilhafte Weise kann somit also bei allen genannten Varianten zumindest ein weiteres Dichtungselement zusätzlich zu der Schnittstellendichtung in der Steckverbindung vorgesehen sein, das zumindest eine abschnittsweise Abdichtung der Rastverbindung bereitstellt. Insbesondere kann der axiale Wirkbereich zwischen Rastmittel des Steckverbinderkörpers und Entriegelungshülse durch das zumindest eine weitere Dichtungselement abgedichtet sein. Dadurch kann das Vordringen von Feuchtigkeit oder Verschmutzung auch bei extremen mechanischen und thermischen Belastungen zuverlässig vermieden werden, ohne die Funktionsweise der Rastverbindung und der Entriegelungshülse zu beeinträchtigen.

Das vorgeschlagene Abdichtungskonzept ist damit trotz der Verwendung einer Entriegelungshülse außerordentlich robust. Wohingegen beim Stand der Technik durch Verkippung und Verschiebung der Entriegelungshülse Undichtigkeiten am Stecksystem entstehen können, kann vorliegend sichergestellt sein, dass auch der bisher nicht abgedichtete Raum zwischen Steckverbinderkörper und Entriegelungshülse zusätzlich gegen Umwelteinflüsse und Verschmutzungen geschützt ist. Die vorgeschlagenen Dichtungselemente sorgen dafür, dass kein Schmutz, Wasser oder sonstige Flüssigkeiten in den Verriegelungsmechanismus im gesteckten Zustand eindringen können, was insbesondere auch die Vereisungsgefahr minimiert.

Auch beim Entriegeln der Rastverbindung können die Dichtungselemente vorzugsweise weiterhin einen Schutz vor Rückständen im Verriegelungsmechanismus bieten.

Auf vorteilhafte Weise kann der vorgeschlagene optische Steckverbinder daher in besonders anspruchsvoller Umgebung eingesetzt werden und höhere Schutzarten bei Dichtigkeitstests erreichen als der bekannte Stand der Technik, insbesondere betreffend Push-Pull-Steckverbinder.

In einer vorteilhaften Weiterbildung der Erfindung kann vorgesehen sein, dass die besagten Dichtungselemente (also das wenigstens eine erste Dichtungselement, das wenigstens eine zweite Dichtungselement und/oder das wenigstens eine dritte Dichtungselement) und/oder der wenigstens eine Abdichtungsbereich der Entriegelungshülse in Steckrichtung axial vor und/oder hinter wenigstens einer Öffnung des Steckverbinderkörpers zur Ausbildung des Rastmittels angeordnet sind.

Die besagten Dichtungselemente können insbesondere in Steckrichtung vor und/oder hinter einem oder mehreren axialen Längsschlitzen oder fensterförmigen Gehäuseöffnungen des Steckverbinderkörpers angeordnet sein.

Besagte Öffnungen in dem Steckverbinderkörper sind mitunter vorgesehen, um die Rastelemente auszubilden, insbesondere wenn diese elastisch bzw. beweglich sein sollen und/oder um die Rastelemente aus einem Innenraum des Steckverbinderkörpers nach außen oder von einem Außenbereich des Steckverbinderkörpers nach innen zu führen, um die Rastverbindung mit dem Gegensteckelement zu ermöglichen.

Durch die vorstehend genannte vorteilhafte Positionierung der Dichtungselemente vor und/oder hinter besagten Öffnungen des Steckverbinderkörpers kann eine besonders gezielte Abdichtung des Rast- und Entriegelungsmechanismus des Steckverbinders gewährleistet sein.

Es kann vorgesehen sein, dass besagte Dichtungselemente an einem in Steckrichtung hinteren Endabschnitt der Entriegelungshülse und/oder an einem in Steckrichtung vorderen Endabschnitt der Entriegelungshülse angeordnet sind.

Insbesondere kann gemäß einer Weiterbildung der Erfindung vorgesehen sein, dass das erste Dichtungselement zusammen mit wenigstens einem weiteren Dichtungselement, insbesondere zusammen mit dem zweiten Dichtungselement und/oder dem dritten Dichtungselement, eine Öffnung des Steckverbinderkörpers für das Rastmittel beidseitig abdichtet (beispielsweise einen axialen Mittelabschnitt zwischen dem Steckverbinderkörper und der Entriegelungshülse).

An dieser Stelle sei erwähnt, dass eine beidseitige Abdichtung besagter Öffnung des Steckverbindergehäuses zwar besonders vorteilhaft, für das vorgeschlagene Dichtkonzept allerdings nicht unbedingt erforderlich ist. Anwendungsbedingt kann grundsätzlich auch bereits eine einseitige Abdichtung bzw. die Verwendung lediglich eines der besagten Dichtungselemente ausreichend sein. Gleichwohl ist eine beidseitige Abdichtung bzw. eine möglichst vollständige Abdichtung des Verriegelungsmechanismus grundsätzlich zu bevorzugen.

Gemäß einer Weiterbildung der Erfindung kann vorgesehen sein, dass das erste Dichtungselement und/oder das zweite Dichtungselement an dem Steckverbinderkörper fixiert ist. Die Fixierung kann beispielsweise formschlüssig erfolgen, etwa durch die Anordnung der Dichtungselemente in einer Ringnut, zwischen zwei Erhebungen oder durch eine sonstige mantelseitige oder stirnseitige Führung oder Aufnahme.

Alternativ oder zusätzlich zu einer formschlüssigen Fixierung kann die Fixierung kraftschlüssig ausgeführt sein, z. B. durch die elastische Rückstellkraft des Dichtungselements selbst (also durch ein Aufspreizen oder Komprimieren des Dichtungselements). Auch eine stoffschlüssige Fixierung (z. B. ein Verkleben oder Aufspritzen) kann alternativ oder zusätzlich vorgesehen sein.

Vorzugsweise sind die Dichtungselemente radial umlaufend um den Steckverbinderkörper oder radial umlaufend innerhalb des Steckverbinderkörpers angeordnet. Die Dichtungselemente können alternativ oder zusätzlich auch an einer axialen Stirnseite des Steckverbinderkörpers, der Entriegelungshülse und/oder des Gegensteckelementkörpers angeordnet sein.

Es kann vorgesehen sein, dass die besagten Dichtungselemente ein radial wirkendes Dichtungsmittel aufweisen, vorzugsweise einen Dichtring (z. B. einen O-Ring oder einen Dichtring mit einer oder mehreren Dichtlippen). Die besagten Dichtungselemente können allerdings auch ein axial bzw. stirnseitig wirkendes Dichtungsmittel aufweisen, wie beispielsweise einen (hohlen) Dichtungskegel. Grundsätzlich können beliebige radial und/oder axial wirkende Dichtungselemente bzw. Dichtungsmittel vorgesehen sein.

Die Dichtungselemente können vorzugsweise aus einem Elastomer ausgebildet sein, insbesondere aus einem thermoplastischen Elastomer, Silikon oder einem vergleichbaren elastisch verformbaren Material, welches eine zuverlässige Abdichtung bei gleichzeitig guter Rückstellfähigkeit und Alterungsbeständigkeit ermöglicht.

In einer Weiterbildung der Erfindung kann vorgesehen sein, dass die Entriegelungshülse unmittelbar mit dem Rastmittel zu dessen Entriegelung wechselwirkt.

Es ist somit zwischen der Entriegelungshülse und dem Rastmittel für die Entriegelung vorzugsweise kein zusätzliches Bauteil vorgesehen. Die Entriegelungshülse vermag im Rahmen der Entriegelung das Rastmittel unmittelbar mechanisch zu kontaktieren, beispielsweise aus einer Rastausnehmung des Gegensteckelements "herauszuheben".

Eine axiale Bewegung der Entriegelungshülse kann vorzugsweise mittels wenigstens einer schrägen Betätigungsfläche des Rastmittels und/oder der Entriegelungshülse in eine laterale Bewegungskomponente des Rastelements umgelenkt werden, so dass die Entriegelung des Rastelements winklig zu dem axialen Verschiebeweg der Entriegelungshülse erfolgt. Die Entriegelung des Rastelements erfolgt dabei vorzugsweise zumindest im Wesentlichen orthogonal zu dem axialen Verschiebeweg der Entriegelungshülse.

In einer Weiterbildung der Erfindung kann vorgesehen sein, dass das Rastmittel an einem elastischen Rastarm des Steckverbinderkörpers angeordnet ist.

Das Rastmittel kann vorzugsweise als ein Rastvorsprung, insbesondere als ein Rasthaken, zur Verrastung in einer Rastausnehmung des Gegensteckelements ausgebildet sein. Alternativ kann das Rastmittel aber auch als Rastausnehmung und das Gegenrastmittel des Gegensteckelements als Rasthaken oder sonstiger Rastvorsprung ausgebildet sein.

Es hat sich als besonders vorteilhaft herausgestellt, wenn das Rastmittel des Steckverbinderkörpers an einem Rastarm angeordnet ist, so dass dieses im Verlauf des Steckvorgangs elastisch auslenkbar ist. Vorzugsweise wirkt besagtes Rastmittel mit einem starren bzw. unbeweglichen Gegenrastmittel des Gegensteckelements zusammen. Es kann allerdings auch vorgesehen sein, dass das Gegenrastmittel des Gegensteckelements elastisch auslenkbar ist, beispielsweise an einem Rastarm des Gegensteckelementkörpers ausgebildet ist, wobei das Rastmittel des Steckverbinderkörpers ebenfalls elastisch oder (in diesem Fall bevorzugt) starr bzw. unbeweglich ausgeführt ist. Die Entriegelungshülse kann die gegenseitige Rastverbindung mit dem Gegensteckelement in diesem Fall beispielsweise entriegeln, indem sie unmittelbar oder mittelbar Einfluss auf das Gegenrastmittel nimmt.

In einer vorteilhaften Weiterbildung der Erfindung kann vorgesehen sein, dass die Entriegelungshülse mittels eines elastischen Bauteils kraftschlüssig an einem Anschlag des Steckverbinderkörpers fixiert ist.

Das elastische Bauteil beaufschlagt die Entriegelungshülse vorzugsweise mit einer in Steckrichtung (oder in Sonderfällen gegebenenfalls auch entgegen der Steckrichtung) wirkenden Rückstellkraft.

Dadurch, dass die Entriegelungshülse unter Verwendung des elastischen Bauteils kraftschlüssig an dem Anschlag des Steckverbinderkörpers fixiert ist, kann sich für die Entriegelungshülse insbesondere im Ruhezustand bzw. im nicht betätigten Zustand eine definierte axiale Ruheposition ergeben, was die Handhabbarkeit der Steckverbindung für einen Benutzer verbessern kann.

Des Weiteren kann die kraftschlüssige Fixierung der Entriegelungshülse an besagtem Anschlag vorteilhaft sicherstellen, dass die Entriegelungshülse unter mechanischer Belastung weniger "klappert".

Dadurch, dass die Entriegelungshülse kraftschlüssig an dem Anschlag fixiert ist, kann außerdem sichergestellt sein, dass die Abdichtung des Rastmechanismus durch die Dichtungselemente dauerhaft sicher gewährt ist, da die Entriegelungshülse stets in der korrekten Position an dem jeweiligen Dichtungselement gehalten wird.

In einer Weiterbildung der Erfindung kann vorgesehen sein, dass das elastische Bauteil unmittelbar zwischen der Entriegelungshülse und dem Steckverbinderkörper angeordnet ist.

Bei dem elastischen Bauteil kann es sich vorzugsweise um eine Druckfeder (z. B. Spiralfeder, Blattfeder oder sonstige Metallfeder) oder um ein Elastomer handeln. Grundsätzlich kann aber beispielsweise auch eine Zugfeder oder eine sonstige Bauweise eines elastischen Elements vorgesehen sein.

In einer vorteilhaften Weiterbildung der Erfindung kann vorgesehen sein, dass die Rastverbindung bzw. der optische Steckverbinder eingerichtet sind, dass bei erfolgreicher (automatischer) Verrastung im Verlauf des Steckvorgangs eine Rückmeldung an den Benutzer erfolgt, welche taktil, akustisch und/oder optisch wahrnehmbar ist.

Eine taktile Rückmeldung kann beispielsweise durch einen deutlich spürbaren Rastpunkt erfolgen. Eine akustische Rückmeldung kann beispielsweise durch ein hörbares Klick- oder Schnappgeräusch beim Einrasten erzeugt werden. Eine optische Rückmeldung kann beispielsweise durch eine optische Sichtmarkierung oder einen Farbring (z. B. durch ein bei erfolgreicher Verrastung nicht mehr sichtbares oder erst durch eine erfolgreiche Verrastung durch eine Sichtöffnung sichtbares, farblich oder mit hohem Kontrast zu umgebenden Bauteilen markiertes Dichtungselement oder sonstiges Bauteil) bereitgestellt werden.

In einer vorteilhaften Weiterbildung der Erfindung kann vorgesehen sein, dass die Entriegelungshülse den Steckverbinderkörper zumindest abschnittsweise umhüllt. Alternativ kann allerdings auch vorgesehen sein, dass die Entriegelungshülse zumindest abschnittsweise innerhalb des Steckverbinderkörpers verläuft.

Die Erfindung betrifft auch ein (optisches) Gegensteckelement, vorzugsweise einen optischen Gegensteckverbinder oder eine Abdeckkappe, zur Verbindung mit einem eine axial verschiebbare Entriegelungshülse aufweisenden optischen Steckverbinder (insbesondere, aber nicht notwendigerweise, der vorstehend und nachstehend beschriebene optische Steckverbinder). Das Gegensteckelement weist einen Gegensteckelementkörper mit einem Gegenrastmittel für eine Rastverbindung mit dem optischen Steckverbinder auf, wobei durch axiales Verschieben der Entriegelungshülse des optischen Steckverbinders besagte Rastverbindung entriegelbar ist.

Erfindungsgemäß ist vorgesehen, dass ein Risko des Eindringens von Flüssigkeiten oder Verschmutzungen zwischen dem Gegensteckelementkörper und der Entriegelungshülse bzw. zwischen dem Steckverbinderkörper und der Entriegelungshülse durch ein unmittelbar zwischen dem Gegensteckelementkörper und der Entriegelungshülse des optischen Steckverbinders angeordnetes, drittes Dichtungselement des optischen Gegensteckelements verhindert oder zumindest reduziert ist. Alternativ zu dem dritten Dichtungselement kann gegebenenfalls auch ein nachfolgend noch erwähntes viertes Dichtungselement des Gegensteckelements oder des optischen Steckverbinders vorgesehen und zwischen dem Gegensteckelementkörper und dem Steckverbinderkörper angeordnet sein.

Besagtes drittes Dichtungselement vermag vorzugsweise mit einem an der Entriegelungshülse des Steckverbinders angeordneten Abdichtungsbereich zur Abdichtung zusammenzuwirken. Vorzugsweise kontaktiert das dritte Dichtungselement den Abdichtungsbereich im gesteckten Zustand dabei unmittelbar.

Es sei erwähnt, dass auch mehrere dritte Dichtungselemente vorgesehen sein können, die vorzugsweise axial entlang des Gegensteckelementkörpers verteilt angeordnet sind, um jeweils einen oder mehrere Abdichtungsbereiche des Steckverbinders bzw. des Steckverbinderkörpers zu kontaktieren.

An dieser Stelle sei erwähnt, dass der Gegensteckelementkörper nachfolgend (insbesondere im Rahmen des Ausführungsbeispiels) auch als "Gegensteckverbinderkörper" bezeichnet wird. Der Begriff "Gegensteckverbinderkörper" lässt sich allerdings grundsätzlich in allen Fällen bedarfsweise auch wieder auf den Begriff "Gegensteckelementkörper" verallgemeinern.

Die Erfindung betrifft auch eine optische Steckverbindung, aufweisend einen optischen Steckverbinder gemäß den vorstehenden und nachfolgenden Ausführungen und ein Gegensteckelement (vorzugsweise, aber nicht notwendigerweise, das Gegensteckelement, insbesondere den optischen Gegensteckverbinder, gemäß den vorstehenden und nachfolgenden Ausführungen).

Auf vorteilhafte Weise kann damit eine optische Steckverbindung mit Push-Pull-Verriegelung für besonders raue Umgebungen mit einem robusten Abdichtungskonzept im entriegelten und im verriegelten Zustand bereitgestellt werden. Die vorgeschlagene optische Steckverbindung eignet sich daher vorteilhaft im Industriebereich, im Transportwesen und auch für Glasfaseranbindungen an Mobilfunkantennen (sogenannte "FTTA" bzw. "Fiber-to-the-Antenna" - Anwendungen). Grundsätzlich eignet sich die optische Steckverbindung allerdings für einen beliebigen Einsatz in der optischen Verbindungstechnik.

In einer vorteilhaften Weiterbildung der Erfindung kann vorgesehen sein, dass der optische Steckverbinder und/oder das Gegensteckelement wenigstens ein viertes Dichtungselement aufweisen, das unmittelbar zwischen dem Steckverbinderkörper und dem Gegensteckelementkörper angeordnet ist.

Vorzugsweise ist das wenigstens eine vierte Dichtungselement im gesteckten Zustand der optischen Steckverbindung in Steckrichtung des optischen Steckverbinders axial vor einer Öffnung des Steckverbinderkörpers für das Rastmittel angeordnet.

Die vorstehenden Merkmale und Vorteile, die hinsichtlich des ersten, zweiten oder dritten Dichtungselementes beschrieben wurden, können - sofern technisch sinnvoll - ohne Weiteres auf das vierte Dichtungselement übertragen werden.

In einer Weiterbildung der Erfindung kann vorgesehen sein, dass der optische Steckverbinder und/oder das Gegensteckelement wenigstens eine Schnittstellendichtung aufweisen, die unmittelbar zwischen dem Steckverbinderkörper und dem Gegensteckelementkörper angeordnet ist, um einen optischen Verbindungsbereich der optischen Steckverbindung abzudichten.

Die Schnittstellendichtung ist vorzugsweise an einem axialen Endabschnitt des Gegensteckelements und/oder an einem axialen Endabschnitt des optischen Steckverbinders angeordnet.

Bei der Schnittstellendichtung kann es sich grundsätzlich um ein beliebiges Dichtungselement handeln, das auf beliebige Weise an dem Steckverbinderkörper und/oder Gegensteckelementkörper befestigt ist. Merkmale und Vorteile, die vorstehend und nachstehend hinsichtlich der Dichtungselemente beschrieben wurden, sind dementsprechend analog auch auf die Schnittstellendichtung übertragbar.

Es kann vorgesehen sein, dass die Schnittstellendichtung aus einem unterschiedlichen Material ausgebildet ist als wenigstens eines (vorzugsweise als alle) der besagten Dichtungselemente. Insbesondere kann vorgesehen sein, dass die Schnittstellendichtung aus Silikon ausgebildet ist, wobei das wenigstens eine (vorzugsweise alle) der besagten Dichtungselemente aus einem von Silikon verschiedenen Material ausgebildet ist bzw. sind, vorzugsweise aus einem Material mit höherer chemischer Beständigkeit als Silikon (bzw. als das Material der Schnittstellendichtung), wie beispielsweise aus PTFE (Polytetrafluorethylen) oder FKM (Fluorkautschuk). Wenn wenigstens eines der Dichtungselemente aus einem chemisch beständigeren Material ausgebildet ist als die Schnittstellendichtung, kann die Lebensdauer des Steckverbinders erhöht werden, da die Schnittstellendichtung vor aggressiven Stoffen geschützt sein kann.

Gemäß einer Weiterbildung der Erfindung kann vorgesehen sein, dass die Schnittstellendichtung in einem axialen Abschnitt der optischen Steckverbindung angeordnet ist, der von zumindest einem der besagten Dichtungselemente bereits zumindest teilweise abgedichtet ist.

Vorzugsweise ist die Schnittstellendichtung zwischen wenigstens zwei der besagten Dichtungselemente angeordnet, so dass für die abzudichtende Seite der Schnittstellendichtung ein mehrstufiges Dichtungsniveau realisiert ist.

Es kann vorgesehen sein, dass die Dichtungselemente jeweils eine abzudichtende Seite aufweisen (also eine medienabgewandte Seite in Bezug zu dem Medium, gegenüber den die Abdichtung hergestellt werden soll), um gegenüber einer medienzugewandten Seite des jeweiligen Dichtungselements ein erstes Dichtungsniveau bereitzustellen. Die Schnittstellendichtung kann vorzugsweise innerhalb des ersten Dichtungsniveaus angeordnet sein (insbesondere die medienzugewandte Seite der Schnittstellendichtung), wobei die Schnittstellendichtung mit einer abzudichtenden bzw. medienabgewandten Seite ein gegenüber dem ersten Dichtungsniveau weiter erhöhtes (d. h. "dichteres"), zweites Dichtungsniveau bereitstellt.

Auf diese Weise vermag die Schnittstellendichtung eine zusätzliche bzw. redundante Abdichtung bereitzustellen. Grundsätzlich kann die Schnittstellendichtung daher auch optional und muss nicht unbedingt vorhanden sein. Gegebenenfalls können die besagten Dichtungselemente bereits eine ausreichende Dichtigkeit für den optischen Verbindungsbereich sicherstellen. Vorzugsweise weist die Steckverbindung allerdings wenigstens eine Schnittstellendichtung und wenigstens eines der besagten Dichtungselemente gemeinsam auf.

Merkmale, die im Zusammenhang mit einem der Gegenstände der Erfindung, namentlich gegeben durch den erfindungsgemäßen optischen Steckverbinder, das erfindungsgemäße Gegensteckelement und die erfindungsgemäße optische Steckverbindung beschrieben wurden, sind auch für die anderen Gegenstände der Erfindung vorteilhaft umsetzbar. Ebenso können Vorteile, die im Zusammenhang mit einem der Gegenstände der Erfindung genannt wurden, auch auf die anderen Gegenstände der Erfindung bezogen verstanden werden.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielsweise ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Ferner sei betont, dass die vorliegend beschriebenen Werte und Parameter Abweichungen oder Schwankungen von ±10% oder weniger, vorzugsweise ±5% oder weniger, weiter bevorzugt ±1% oder weniger, und ganz besonders bevorzugt ±0,1% oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Die Erfindung betrifft auch einen von Anspruch 1 unabhängigen optischen Steckverbinder, vorzugsweise einen optischen Kabelsteckverbinder, zur Verbindung mit einem Gegensteckelement, insbesondere mit einem optischen Gegensteckverbinder oder einer Abdeckkappe, aufweisend einen Steckverbinderkörper und eine relativ zu dem Steckverbinderkörper axial verschiebbare Entriegelungshülse, wobei durch axiales Verschieben der Entriegelungshülse, vorzugsweise durch ein Zurückziehen entgegen der Steckrichtung, ein Rastmittel des Steckverbinderkörpers aus einer Rastverbindung mit dem optischen Gegensteckelement entriegelbar ist, und wobei die Entriegelungshülse kraftschlüssig an einem Anschlag des Steckverbinderkörpers fixiert ist, vorzugsweise unter Verwendung eines elastischen Bauteils, das die Entriegelungshülse vorzugsweise mit einer in Steckrichtung oder entgegen der Steckrichtung wirkenden Rückstellkraft beaufschlagt. Die weiteren Merkmale des Anspruchs 1 und der abhängigen Ansprüche sowie die in der vorliegenden Beschreibung beschriebenen Merkmale (insbesondere hinsichtlich des elastischen Bauteils und dessen Anordnung im optischen Steckverbinder) betreffen vorteilhafte Ausführungsformen und Varianten dieses weiteren optischen Steckverbinders.

Nachfolgend werden Ausführungsbeispiele der Erfindung anhand der Zeichnungen näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1: eine seitliche Schnittdarstellung einer optischen Steckverbindung aus einem optischen Steckverbinder und einem optischen Gegensteckverbinder gemäß einem ersten Ausführungsbeispiel, in einem nicht gesteckten Zustand;
- Figur 2: die optische Steckverbindung gemäß Figur 1 in einem gesteckten und verriegelten Zustand einer Rastverbindung zwischen dem optischen Steckverbinder und dem optischen Gegensteckverbinder;
- Figur 3: einen Ausschnitt der optischen Steckverbindung gemäß Figur 2 in einem entriegelten Zustand der Rastverbindung;
- Figur 4: eine seitliche Schnittdarstellung einer optischen Steckverbindung aus einem optischen Steckverbinder und einem optischen Gegensteckverbinder gemäß einem zweiten Ausführungsbeispiel, in einem nicht gesteckten Zustand;
- Figur 5: eine seitliche Schnittdarstellung einer optischen Steckverbindung aus einem optischen Steckverbinder und einem optischen Gegensteckverbinder gemäß einem dritten Ausführungsbeispiel, in einem nicht gesteckten Zustand;
- Figur 6: eine Seitenansicht eines Steckverbinderkörpers eines optischen Steckverbinders gemäß einem vierten Ausführungsbeispiel; und
- Figur 7: einen Ausschnitt des Dichtungskonzepts einer optischen Steckverbindung aus einem optischen Steckverbinder mit dem Steckverbinderkörper gemäß Figur 6 und einem korrespondierenden optischen Gegensteckverbinder.

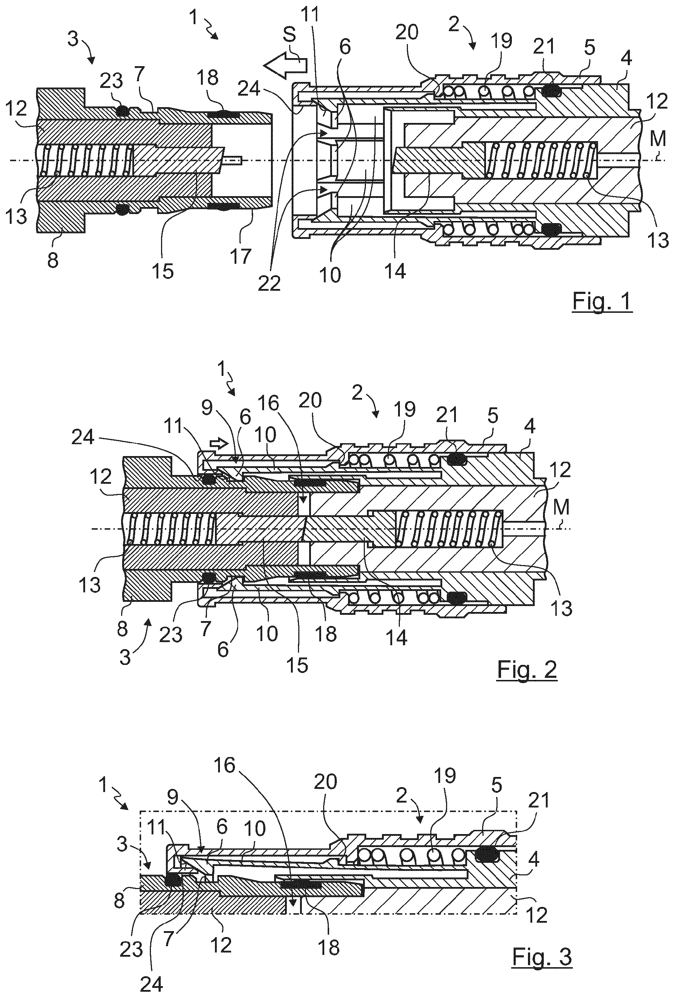

In den Figuren 1 bis 3 ist eine optische Steckverbindung 1 gemäß einem ersten Ausführungsbeispiel der Erfindung gezeigt. Die optische Steckverbindung 1 umfasst einen optischen Steckverbinder 2 und einen optischen Gegensteckverbinder 3, die in Figur 1 in einem nicht gesteckten und in Figur 2 in einem gesteckten Zustand gezeigt sind. Figur 3 zeigt einen vergrößerten Ausschnitt der gesteckten, jedoch (wie nachfolgend noch beschrieben) bereits wieder entriegelten Steckverbindung 1.

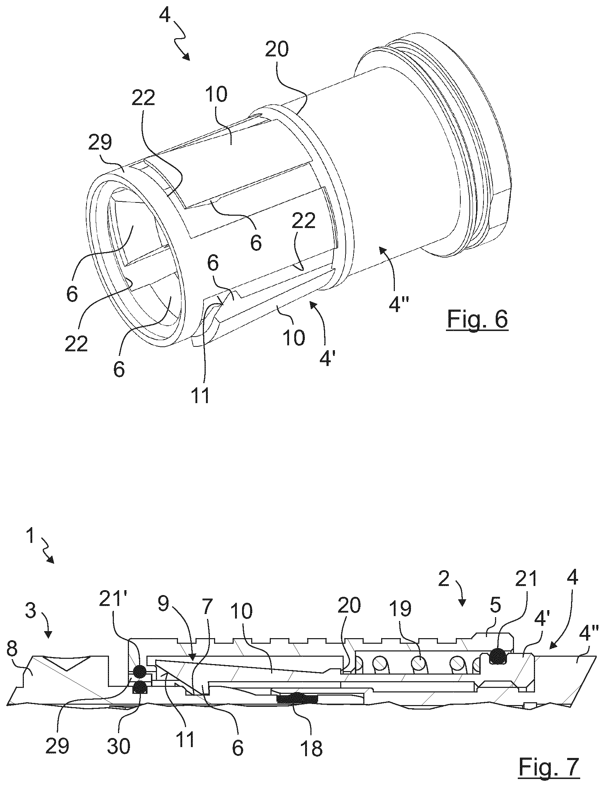

Der optische Steckverbinder 2, bei dem es sich vorzugsweise um einen optischen Kabelsteckverbinder handeln kann, weist einen Steckverbinderkörper 4 und eine relativ zu dem Steckverbinderkörper 4 axial verschiebbare Entriegelungshülse 5 auf. Die Entriegelungshülse 5 umhüllt den Steckverbinderkörper 4 zumindest abschnittsweise, wobei darauf hingewiesen sei, dass die Verhältnisse grundsätzlich auch umgekehrt sein können, wonach der Steckverbinderkörper 4 die Entriegelungshülse 5 zumindest abschnittsweise umhüllt. In den Figuren 1 bis 5 ist der Steckverbinderkörper 4 ein einteiliges Bauteil - dies ist allerdings nur beispielhaft zu verstehen. Denn vorzugsweise kann der Steckverbinderkörper als mehrteilige Baugruppe ausgebildet sein und ein vorderes Bauteil 4' und ein hinteres Bauteil 4" aufweisen, wie in den Figuren 6 und 7 angedeutet.

In den Figuren ist durchgängig ein optischer Gegensteckverbinder 3 zur Verwendung mit dem optischen Steckverbinder 2 gezeigt. Wie vorstehend bereits erwähnt, kann sich der optische Steckverbinder 2 allerdings auch zur Verwendung mit einer Abdeckkappe bzw. einem Dummy-Gegensteckverbinder eignen (in den Figuren nicht gezeigt). Grundsätzlich kann sich der optische Steckverbinder 2 zur Verwendung mit beliebigen Gegensteckelementen eignen. Die vorstehenden und nachstehenden Beispiele sind daher nicht einschränkend für die Erfindung zu verstehen.

Der optische Steckverbinder 2 bzw. dessen Steckverbinderkörper 4 weist mehrere entlang des Umfangs verteilt angeordnete Rastmittel 6 auf (grundsätzlich können auch weniger Rastmittel 6 bis hin zu nur einem einzigen Rastmittel 6 ausreichend sein), die zusammen mit einem oder mehreren korrespondierenden Gegenrastmitteln 7 eines Gegensteckelementkörpers bzw. vorliegend eines "Gegensteckverbinderkörpers" 8 des optischen Gegensteckverbinders 3 eine gegenseitige Rastverbindung 9 auszubilden vermögen. Besagte Rastverbindung 9 ist ausgebildet, um bei einem Steckvorgang automatisch zu verrasten, wobei vorzugsweise bei erfolgreicher Verrastung eine taktile, akustische und/oder optische Rückmeldung an den Benutzer gegeben wird. Beispielhaft sind die Rastmittel 6 des Steckverbinderkörpers 4 an jeweiligen elastischen Rastarmen 10 angeordnet und als Rasthaken zur Verrastung in einer gemeinsamen, starren Rastausnehmung des Gegensteckverbinders 3 ausgebildet. Beispielhaft ist als Rastausnehmung bzw. Gegenrastmittel 7 eine entlang des Umfangs des Gegensteckverbinderkörpers 8 umlaufende Ringnut vorgesehen, die einen geeigneten Rücksprung aufweist, der von den Rasthaken bzw. Rastmitteln 6 des Steckverbinderkörpers 4 hintergriffen werden kann. Grundsätzlich kommen allerdings nahezu beliebige Arten von gegenseitigen Rastverbindungen in Frage, bei denen das Rastmittel 6 des Steckverbinderkörpers 4 beispielsweise auch als Rastausnehmung ausgebildet sein kann (z. B. ebenfalls an einem elastischen Rastarm 10) und/oder bei denen der elastische Verbindungspartner an dem Gegensteckverbinder 3 bzw. Gegensteckverbinderkörper 8 ausgebildet ist. Die Erfindung ist hinsichtlich der Rastverbindung 9 der optischen Steckverbindung 1 lediglich exemplarisch zu verstehen (beispielsweise sind in der später noch beschriebenen Figur 7 einige der Rastmittel 6 starr angebunden und nicht an einem Rastarm 10 befestigt).

Um ein ungewolltes Trennen bzw. Entriegeln der optischen Steckverbindung 1 zu vermeiden und dennoch ein komfortables Bedienkonzept für den Benutzer zu bereitzustellen, kann die Rastverbindung 9 zwischen optischem Steckverbinder 2 und optischem Gegensteckverbinder 3 durch axiales Verschieben der Entriegelungshülse 5, insbesondere durch ein "Zurückziehen" der Entriegelungshülse 5 entgegen der Steckrichtung S des optischen Steckverbinders 2, entriegelbar sein (vgl. Pfeil in Figur 2). Dieses Funktionsprinzip ist auch als "Push-Pull"-Verriegelung bekannt und anhand einer Zusammenschau der Figuren 2 und 3 gut erkennbar. Durch das Zurückziehen der Entriegelungshülse 5 werden die Rasthaken bzw. die Rastmittel 6 des Steckverbinderkörpers 4 aus dem Gegenrastmittel 7 bzw. aus der Rastausnehmung des Gegensteckverbinderkörpers 8 herausgehoben, wie in Figur 3 dargestellt, woraufhin der optische Gegensteckverbinder 3 entriegelt ist und die Steckverbindung 1 entgegen der Steckrichtung S wieder getrennt werden kann.

Zur Entriegelung der Rastverbindung 9 ist im Ausführungsbeispiel eine unmittelbare Wechselwirkung zwischen Rastmittel 6 und Entriegelungshülse 5 vorgesehen, wobei grundsätzlich aber auch eine mittelbare Entriegelung unter Verwendung eines weiteren Bauteils möglich sein kann. Ferner kann auch vorgesehen sein, dass die Entriegelungshülse 5 das Gegenrastmittel 7 unmittelbar oder mittelbar beeinflusst (zusätzlich oder alternativ zu dem Rastmittel 6).

Die axiale Bewegung der Entriegelungshülse 5 wird vorzugsweise mittels zumindest einer schrägen Betätigungsfläche 11 in eine laterale Bewegungskomponente des Rastmittels 6 umgelenkt (im Ausführungsbeispiel durch jeweilige schräge Betätigungsflächen 11 der Rastmittel 6), so dass die Entriegelung des Rastmittels 6 winklig zu dem axialen Verschiebeweg der Entriegelungshülse 5 bzw. winklig zu der Steckrichtung S / einer Mittenachse M des optischen Steckverbinders 2 erfolgen kann.

Der optische Steckverbinder 2 weist einen innerhalb des Steckverbinderkörpers 4 in einem Ferrulenträger 12 elastisch bzw. durch eine Druckfeder 13 gelagertes optisches Verbindungselement 14 auf, bei dem es sich um eine optische Ferrule oder um ein sonstiges optisches Element handeln kann. Alternativ können der Steckverbinderkörper 4, der Ferrulenträger 12 und/oder das optische Verbindungselement 14 auch einstückig bzw. monolithisch ausgebildet sein. Der Lichtwellenleiter selbst ist in den Figuren zur Vereinfachung ausgeblendet. Dementsprechend weist auch der optische Gegensteckverbinder 3 einen innerhalb seines Gegensteckverbinderkörpers 8 geführten Ferrulenträger 12 auf, in dem ein optisches Gegenverbindungselement 15 ebenfalls beweglich unter Verwendung einer Druckfeder 13 gelagert ist. In dem gesteckten Zustand der optischen Steckverbindung 1 sind das optische Verbindungselement 14 des optischen Steckverbinders 2 und das optische Gegenverbindungselement 15 des optischen Gegensteckverbinders 3 zur optischen Signalübertragung auf bekannte Weise miteinander verbunden (vgl. Figur 2).

Den optischen Verbindungsbereich 16 der optischen Steckverbindung 1 gilt es vorzugsweise abzudichten, um das Eindringen von Flüssigkeiten und Verschmutzungen zu verhindern. Hierfür weist der optische Gegensteckverbinder 3 an einem voreilenden Endabschnitt 17 des Gegensteckverbinderkörpers 8 eine Schnittstellendichtung 18 auf, die im gesteckten Zustand der optischen Steckverbindung 1 unmittelbar zwischen dem Steckverbinderkörper 4 und dem Gegensteckverbinderkörper 8 angeordnet ist. Alternativ oder ergänzend kann eine Schnittstellendichtung auch im optischen Steckverbinder 2 ausgebildet sein.

Es kann optional vorteilhaft sein, sicherzustellen, dass die Betätigung der Entriegelungshülse 5 gegen eine definierte Rückstellkraft erfolgt, wodurch ein definierter Ruhezustand der Entriegelungshülse 5 (vgl. Figuren 1 und 2) sichergestellt ist. Hierfür kann vorgesehen sein, dass die Entriegelungshülse 5 mittels eines elastischen Bauteils 19 kraftschlüssig an einem Anschlag 20 des Steckverbinderkörpers 4 fixiert ist. Besagtes elastisches Bauteil 19 kann hierfür unmittelbar zwischen der Entriegelungshülse 5 und dem Steckverbinderkörper 4 angeordnet sein und ist in den Ausführungsbeispielen als Druckfeder ausgebildet.

Die Erfinder haben erkannt, dass es für einen verlässlichen und langlebigen Betrieb der optischen Steckverbindung 1 vorteilhaft sein kann, ergänzend zur Abdichtung des optischen Verbindungsbereichs 16 eine Abdichtung der Rastverbindung 9 bzw. des axialen Wirkbereichs zwischen Rastmittel 6 des Steckverbinderkörpers 4 und Entriegelungshülse 5 des Steckverbinders 2 bereitzustellen. Auf diese Weise kann das Vordringen von Feuchtigkeit oder Verschmutzung auch bei extremen mechanischen und thermischen Belastungen zuverlässig vermieden werden und sichergestellt sein, dass die Funktionsweise der Rastverbindung 9 und der Entriegelungshülse 5 nicht beeinträchtigt wird.

Zur besagten Optimierung der Abdichtung der optischen Steckverbindung 1 und insbesondere zur Abdichtung des Bereichs zwischen Steckverbinderkörper 4 und Entriegelungshülse 5 können verschiedene Varianten als eigenständige Alternativen und/oder in Kombination miteinander in Frage kommen. Die nachstehenden und in den Figuren dargestellten Merkmalskombinationen hinsichtlich der nachfolgend beschriebenen Dichtungselemente und deren Positionierung ist daher im Rahmen des erfinderischen Grundgedankens lediglich beispielhaft zu verstehen.

Es kann insbesondere vorgesehen sein, dass der optische Steckverbinder 2 wenigstens ein unmittelbar zwischen dem Steckverbinderkörper 4 und der Entriegelungshülse 5 angeordnetes erstes Dichtungselement 21 aufweist. In allen Ausführungsbeispielen ist beispielhaft ein erstes Dichtungselement 21 in Steckrichtung S des optischen Steckverbinders 2 axial hinter einer Öffnung 22 des Steckverbinderkörpers 4 für das Rastmittel 6 angeordnet und hierfür an einem in Steckrichtung S hinteren axialen Endabschnitt des Steckverbinderkörpers 4 positioniert. Bei besagter Öffnung 22 des Steckverbinderkörpers 4 handelt es sich im Falle der Ausführungsbeispiele der Figuren 1 bis 5 um axiale Längsschlitze zwischen den elastischen Rastarmen 10. Somit kann das Eindringen von Flüssigkeiten oder Verschmutzungen ausgehend von dem in Steckrichtung S hinteren Ende der Entriegelungshülse 5 in den Rast- und Entriegelungsmechanismus verhindert werden.

Besonders vorteilhaft kann es sein, wenn das erste Dichtungselement 21 (oder ein sonstiges Dichtungselement) zusammen mit wenigstens einem weiteren Dichtungselement die besagte Öffnung 22 des Steckverbinderkörpers 4 beidseitig abdichtet. Diesbezüglich ist im Ausführungsbeispiel der Figuren 1 bis 3 ein drittes Dichtungselement 23 des optischen Gegensteckverbinders 3 vorgesehen, das im gesteckten Zustand unmittelbar zwischen dem Gegensteckverbinderkörper 8 und der Entriegelungshülse 5 des optischen Steckverbinders 2 angeordnet ist und damit an einem entsprechenden Abdichtungsbereich 24 der Entriegelungshülse 5 unmittelbar anliegt. Das dritte Dichtungselement 23 bzw. der Abdichtungsbereich 24 der Entriegelungshülse 5 sind hierfür in Steckrichtung S des optischen Steckverbinders 2 axial vor der Öffnung 22 angeordnet und beispielhaft an einem in Steckrichtung S des optischen Steckverbinders 2 axial vorderen Endabschnitt der Entriegelungshülse 5 positioniert.

Durch die beschriebene Anordnung des ersten Dichtungselements 21 und des dritten Dichtungselements 23 ist die Schnittstellendichtung 18 in einem axialen Abschnitt der optischen Steckverbindung 1 angeordnet, der durch besagtes erstes und drittes Dichtungselement 21, 23 bereits abgedichtet ist. Auf diese Weise wird für die abzudichtende Seite der Schnittstellendichtung 18 ein mehrstufiges Dichtungsniveau realisiert und damit eine gewisse Redundanz für die Abdichtung des optischen Verbindungsbereichs 16. Die Verwendung besagter Dichtungselemente 21, 23 führt somit nicht ausschließlich zu dem Vorteil einer robusten und langlebigen Ver- und Entriegelungsfunktion, sondern außerdem auch zu einer erhöhten Abdichtung des optischen Verbindungsbereichs 16 selbst.

Wie bereits erwähnt, können sich zur Bereitstellung des erfindungsgemäßen Dichtungskonzepts verschiedene Varianten ergeben, von denen in den Ausführungsbeispielen lediglich einige verdeutlicht werden können.

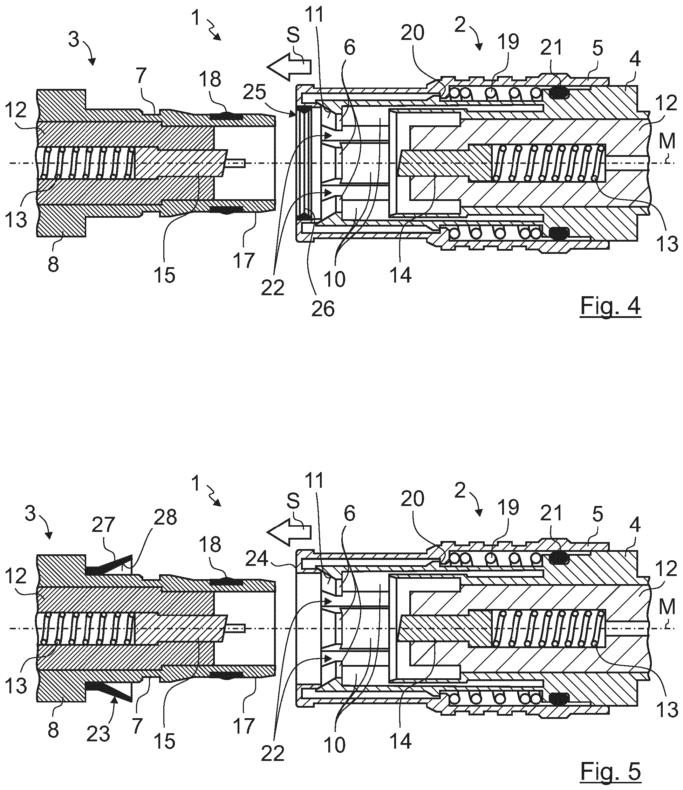

Beispielhaft soll nun anhand des Ausführungsbeispiels von Figur 4 demonstriert werden, dass alternativ zu Verwendung eines dritten Dichtungselements 23 des Gegensteckverbinders 3 auch vorgesehen sein kann, dass eine Abdichtung in Steckrichtung S axial vor der Öffnung 22 des Steckverbinderkörpers 4 durch wenigstens ein zweites Dichtungselement 25 des optischen Steckverbinders 2 erfolgen kann. Beispielhaft ist hierfür an dem vorderen Endabschnitt der Entriegelungshülse 5 innenmantelseitig ein ringförmiges zweites Dichtungselement 25 mit einer Dichtlippe 26 angespritzt, das im gesteckten Zustand der optischen Steckverbindung 1 unmittelbar zwischen dem Gegensteckverbinderkörper 8 und der Entriegelungshülse 5 positioniert ist, um die Öffnung 22 des Steckverbinderkörpers 4 ausgehend von dem vorderen Ende der Entriegelungshülse 5 (und damit zusammen mit dem ersten Dichtungselement 21 beidseitig) abzudichten. Es sei erwähnt, dass das Dichtungselement 25 nicht unbedingt an den Steckverbinderkörper 4 angespritzt sein muss, sondern grundsätzlich auf beliebige Weise befestigt sein kann.

Anhand des dritten Ausführungsbeispiels, das in Figur 5 dargestellt ist, soll außerdem demonstriert werden, dass alternativ oder zusätzlich zur Verwendung von den bereits beschriebenen radialen Dichtungselementen 21, 23, 25 auch axiale bzw. stirnseitige Dichtungselemente im Rahmen der Erfindung in Frage kommen können. Beispielhaft weist der optische Gegensteckverbinder 3 gemäß Figur 5 hierfür einen umfangsseitig um den Gegensteckverbinderkörper 8 umlaufenden hohlen Dichtungskegel 27 mit stirnseitig geöffneter Dichtfläche 28 auf, mittels der im gesteckten Zustand der optischen Steckverbindung 1 ein stirnseitiger Abdichtungsbereich 24 bzw. das stirnseitige Ende der Entriegelungshülse 5 kontaktierbar ist. Alternativ kann eine stirnseitige bzw. frontale Abdichtung allerdings auch mit konstruktiv anders gestalteten Dichtungselementen erreichbar sein.

Wie vorstehend ebenfalls bereits erwähnt, können im Rahmen des Erfindungsgedankens außerdem verschiedene Varianten des Verriegelungs- und Entriegelungskonzepts vorgesehen sein. Insbesondere kann vorgesehen sein, dass der Steckverbinderkörper 4 in seiner Gestaltung und Funktionsweise von den Darstellungen der vorstehend erwähnten Figuren abweicht.

Beispielhaft ist in Figur 6 ein mehrteiliger Steckverbinderkörper 4 eines optischen Steckverbinders 2 gemäß einem vierten Ausführungsbeispiel der Erfindung in einer perspektivischen Einzeldarstellung gezeigt. Der Steckverbinderkörper 4 ist hülsenförmig ausgebildet und weist wiederum elastische Rastarme 10 auf, an deren vorderen, freien Enden Rastmittel 6 in Form von Rasthaken zur Verrastung in Rastausnehmungen bzw. Gegenrastmitteln 7 des Gegensteckverbinders 3 ausgebildet sind. Die Rastarme 10 erstrecken sich aus einem vorderen Bauteil 4' des Steckverbinderkörpers 4. Zur Erhöhung der mechanischen Stabilität und zur Verstärkung der Rastverbindung 9 ist der Steckverbinderkörper 4 der Figur 6 im Gegensatz zu den in den Figu-ren 1 bis 5 dargestellten Steckverbinderkörpern 4 an seinem vorderen Ende des vorderen Bauteils 4' durch einen ringförmig umlaufenden Steg 29 vollständig umlaufend geschlossen. Bei der im Rahmen der Erfindung abzudichtenden Öffnung 22 des Steckverbinderkörpers 4 handelt es sich somit nicht um nach vorne geöffnete Schlitze, sondern um fensterförmige Gehäuseöffnungen. Daher kann es vorteilhaft sein, einen weiteren axialen Abschnitt für die Abdichtung der geschlossenen Steckverbindung 1 zu berücksichtigen.

Um dies zu verdeutlichen, ist anhand von Figur 7 ein Ausschnitt des Dichtungskonzepts einer entsprechenden optischen Steckverbindung 1 in einem gesteckten Zustand gezeigt. Wie auch bereits zuvor, weist der Gegensteckverbinder 3 beispielhaft besagte Schnittstellendichtung 18 auf, die unmittelbar zwischen dem Steckverbinderkörper 4 und dem Gegensteckverbinderkörper 8 angeordnet ist, um den optischen Verbindungsbereich 16 der optischen Steckverbindung 1 abzudichten. Ferner ist in Steckrichtung S hinter der fensterförmigen Öffnung 22 des Steckverbinderkörpers 4 das bereits in den Figuren 1 bis 5 erläuterte erste Dichtungselement 21 zwischen dem Steckverbinderkörper 4 und der Entriegelungshülse 5 vorgesehen.

Im Gegensatz zu den vorherigen Ausführungsbeispielen ist in Figur 7 allerdings keine unmittelbare Abdichtung zwischen der Entriegelungshülse 5 und dem Gegensteckverbinderkörper 8 vorgesehen, sondern zwischen dem Steckverbinderkörper 4 und dem Gegensteckverbinderkörper 8. Hierfür weist wahlweise der optische Steckverbinder 2 und/oder der optische Gegensteckverbinder 3 wenigstens ein viertes Dichtungselement 30 auf, das ähnlich wie die Schnittstellendichtung 18 unmittelbar zwischen Gegensteckverbinderkörper 8 und Steckverbinderkörper 4 angeordnet ist, allerdings in einem axialen Abschnitt vor der fensterförmigen Öffnung 22. Ergänzend kann optional ein weiteres erstes Dichtungselement 21' vorgesehen sein, das unmittelbar zwischen dem Steckverbinderkörper 4 und der Entriegelungshülse 5 angeordnet ist, und zwar vorzugsweise ebenfalls axial vor der fensterförmigen Öffnung 22, insbesondere in Bereich des vierten Dichtungselements 30. An dieser Stelle sei betont, dass sich, insofern mehrere erste Dichtungselemente 21, 21' vorgesehen sind (oder auch mehrere zweite, dritte oder vierte Dichtungselemente) die Dichtungselemente konstruktiv voneinander unterscheiden können.

Die Dichtungselemente 21, 21', 23, 25, 30 und die Schnittstellendichtung 18 sind vorzugsweise formschlüssig an dem Steckverbinderkörper 4 bzw. an dem Gegensteckverbinderkörper 8 fixiert und hierfür beispielsweise innerhalb einer jeweiligen außenmantelseitigen Ringnut angeordnet. Zusätzlich oder alternativ kann die Fixierung auch kraftschlüssig erfolgen, insbesondere durch ein gewisses Aufspannen bzw. Aufspreizen der jeweiligen Dichtungselemente 21, 21', 23, 25, 30. Selbstverständlich kann auch vorgesehen sein, die Dichtungselemente 21, 21', 23, 25, 30 und die Schnittstellendichtung 18 stoffschlüssig mit dem Steckverbinderkörper 4 bzw. mit dem Gegensteckverbinderkörper 8 zu verbinden und/oder mit diesen monolithisch auszugestalten.

Grundsätzlich können im Rahmen der Erfindung auch noch viele weitere Varianten und Kombinationen von Dichtungselementen 21, 21', 23, 25, 30 vorgesehen sein. Insbesondere sei diesbezüglich auch nochmals betont, dass die Entriegelungshülse 5 gegebenenfalls auch innerhalb des Steckverbinderkörpers 4 angeordnet sein kann. Ferner kann beispielsweise auch der Steckverbinder 2 in den Gegensteckverbinder 3 einsteckbar sein, im Gegensatz zu den vorstehend beschriebenen Varianten. Es sei außerdem betont, dass im Falle eines mehrteiligen Steckverbinderkörpers 4, wie in den Figuren 6 und 7 dargestellt, das erste Dichtungselement 21 beispielsweise auch zwischen dem hinteren Bauteil 4' und der Entriegelungshülse 5 angeordnet sein kann (anstatt zwischen dem vorderen Bauteil 4' und der Entriegelungshülse), wenn die Entriegelungshülse 5 entsprechend verlängert ist.

## Patentansprüche

1. Optischer Steckverbinder (2), vorzugsweise optischer Kabelsteckverbinder, zur Verbindung mit einem Gegensteckelement (3), aufweisend einen Steckverbinderkörper (4) und eine relativ zu dem Steckverbinderkörper (4) axial verschiebbare Entriegelungshülse (5), wobei durch axiales Verschieben der Entriegelungshülse (5), vorzugsweise durch ein Zurückziehen entgegen der Steckrichtung (S), ein Rastmittel (6) des Steckverbinderkörpers (4) aus einer Rastverbindung (9) mit dem Gegensteckelement (3) entriegelbar ist,
**dadurch gekennzeichnet, dass**
ein Risko des Eindringens von Flüssigkeiten oder Verschmutzungen zwischen den Steckverbinderkörper (4) und die Entriegelungshülse (5) durch wenigstens
a) ein unmittelbar zwischen dem Steckverbinderkörper (4) und der Entriegelungshülse (5) angeordnetes erstes Dichtungselement (21, 21') des optischen Steckverbinders (2); und/oder
b) ein unmittelbar zwischen dem Gegensteckelement (3) und der Entriegelungshülse (5) angeordnetes zweites Dichtungselement (25) des optischen Steckverbinders (2); und/oder
c) einen an einem in Steckrichtung (S) vorderen Endabschnitt der Entriegelungshülse (5) angeordneten Abdichtungsbereich (24) zur unmittelbaren Kontaktierung mit einem dritten Dichtungselement (23) des Gegensteckelements (3)
verhindert oder zumindest reduziert ist.

2. Optischer Steckverbinder (2) nach Anspruch 1,
**dadurch gekennzeichnet, dass**
die besagten Dichtungselemente (21, 21', 23, 25, 30) in Steckrichtung (S) axial vor und/oder hinter wenigstens einer Öffnung (22) des Steckverbinderkörpers (4) zur Ausbildung des Rastmittels (6) angeordnet sind, insbesondere in Steckrichtung (S) vor und/oder hinter einem oder mehreren axialen Längsschlitzen oder fensterförmigen Gehäuseöffnungen.

3. Optischer Steckverbinder (2) nach Anspruch 2,
**dadurch gekennzeichnet, dass**
das erste Dichtungselement (21, 21') zusammen mit wenigstens einem weiteren Dichtungselement (23, 25, 30), insbesondere zusammen mit dem zweiten Dichtungselement (25) oder dem dritten Dichtungselement (23), eine Öffnung (22) des Steckverbinderkörpers (4) für das Rastmittel (6) beidseitig abdichtet.

4. Optischer Steckverbinder (2) nach einem der Ansprüche 1 bis 3,
**dadurch gekennzeichnet, dass**
das erste Dichtungselement (21, 21') und/oder das zweite Dichtungselement (25) formschlüssig an dem Steckverbinderkörper (4) fixiert sind, insbesondere innerhalb einer Ringnut des Steckverbinderkörpers (4).

5. Optischer Steckverbinder (2) nach einem der Ansprüche 1 bis 4,
**dadurch gekennzeichnet, dass**
die Entriegelungshülse (5) unmittelbar mit dem Rastmittel (6) zu dessen Entriegelung wechselwirkt.

6. Optischer Steckverbinder (2) nach einem der Ansprüche 1 bis 5,
**dadurch gekennzeichnet, dass**
das Rastmittel (6) an einem elastischen Rastarm (10) des Steckverbinderkörpers (4) angeordnet ist, wobei das Rastmittel (6) vorzugsweise als ein Rasthaken zur Verrastung in einer Rastausnehmung des Gegensteckelements (3) ausgebildet ist.

7. Optischer Steckverbinder (2) nach einem der Ansprüche 1 bis 6,
**dadurch gekennzeichnet, dass**
die Entriegelungshülse (5) mittels eines elastischen Bauteils (19) kraftschlüssig an einem Anschlag (20) des Steckverbinderkörpers (4) fixiert ist, wobei das elastische Bauteil (19) die Entriegelungshülse (5) vorzugsweise mit einer in Steckrichtung (S) wirkenden Rückstellkraft beaufschlagt.

8. Optischer Steckverbinder (2) nach Anspruch 7,
**dadurch gekennzeichnet, dass**
das elastische Bauteil (19) unmittelbar zwischen der Entriegelungshülse (5) und dem Steckverbinderkörper (4) angeordnet ist, und vorzugsweise als eine Druckfeder oder als ein Elastomer ausgebildet ist.

9. Optischer Steckverbinder (2) nach einem der Ansprüche 1 bis 8,
**dadurch gekennzeichnet, dass**
die Rastverbindung (9) ausgebildet ist, um bei einem Steckvorgang automatisch zu verrasten, wobei vorzugsweise bei erfolgreicher Verrastung eine taktile und/oder akustische und/oder optische Rückmeldung an den Benutzer gegeben wird.

10. Optischer Steckverbinder (2) nach einem der Ansprüche 1 bis 9,
**dadurch gekennzeichnet, dass**
die Entriegelungshülse (5) den Steckverbinderkörper (4) zumindest abschnittsweise umhüllt.

11. Gegensteckelement (3), vorzugsweise optischer Gegensteckverbinder (3) oder Abdecckappe, zur Verbindung mit einem eine axial verschiebbare Entriegelungshülse (5) aufweisenden optischen Steckverbinder (2), aufweisend einen Gegensteckelementkörper (8) mit einem Gegenrastmittel (7) für eine Rastverbindung (9) mit dem optischen Steckverbinder (2), wobei durch axiales Verschieben der Entriegelungshülse (5) besagte Rastverbindung (9) entriegelbar ist,
**dadurch gekennzeichnet, dass**
ein Risko des Eindringens von Flüssigkeiten oder Verschmutzungen zwischen den Gegensteckelementkörper (8) und die Entriegelungshülse (5) durch ein unmittelbar zwischen dem Gegensteckelementkörper (8) und der Entriegelungshülse (5) des optischen Steckverbinders (2) angeordnetes, drittes Dichtungselement (23) des optischen Gegensteckelements (3) verhindert oder zumindest reduziert ist.

12. Optische Steckverbindung (1), aufweisend einen optischen Steckverbinder (2) gemäß einem der Ansprüche 1 bis 10 und das Gegensteckelement (3), vorzugsweise das Gegensteckelement (3) gemäß Anspruch 11.

13. Optische Steckverbindung (1) nach Anspruch 12,
**dadurch gekennzeichnet, dass**
der optische Steckverbinder (2) und/oder das Gegensteckelement (3) wenigstens ein viertes Dichtungselement (30) aufweisen, das unmittelbar zwischen dem Steckverbinderkörper (4) und dem Gegensteckelementkörper (8) angeordnet ist, und das im gesteckten Zustand der optischen Steckverbindung (1) in Steckrichtung (S) des optischen Steckverbinders (2) axial vor einer Öffnung (22) des Steckverbinderkörpers (4) für das Rastmittel (6) angeordnet ist.

14. Optische Steckverbindung (1) nach Anspruch 12 oder 13,
**dadurch gekennzeichnet, dass**
der optische Steckverbinder (2) und/oder das Gegensteckelement (3) wenigstens eine Schnittstellendichtung (18) aufweisen, die unmittelbar zwischen dem Steckverbinderkörper (4) und dem Gegensteckelementkörper (8) angeordnet ist, um einen optischen Verbindungsbereich (16) der optischen Steckverbindung (1) abzudichten.

15. Optische Steckverbindung (1) nach Anspruch 14,
**dadurch gekennzeichnet, dass**
die Dichtungselemente (21, 21', 23, 25, 30) jeweils eine abzudichtende Seite aufweisen, um gegenüber einer medienzugewandten Seite des jeweiligen Dichtungselements (21, 21', 23, 25, 30) ein erstes Dichtungsniveau bereitzustellen, wobei die Schnittstellendichtung (18) innerhalb des ersten Dichtungsniveaus angeordnet ist, und wobei die Schnittstellendichtung (18) mit einer abzudichtenden Seite ein gegenüber dem ersten Dichtungsniveau weiter erhöhtes, zweites Dichtungsniveau bereitstellt.
